# EUROPÄISCHE PATENTSCHRIFT

(11) **EP 3 986 113 B1**
(45) Veröffentlichungstag und Bekanntmachung des Hinweises auf die Patenterteilung: **31.12.2025**
(21) Anmeldenummer: 20733396.4
(22) Anmeldetag: 15.06.2020
(51) Int. Cl.: A01F 15/18, F16G 3/00

(54) **RIEMEN**
BELT
COURROIE

(30) Priorität: 18.06.2019 DE 102019208827
(43) Veröffentlichungstag der Anmeldung: 27.04.2022
(73) Patentinhaber: ContiTech Transportbandsysteme GmbH, 30165 Hannover (DE); Pöttinger Landtechnik GmbH, 4710 Grieskirchen (AT)
(72) Erfinder: BEHRENS, Carsten, 30165 Hannover (DE); LACKNER, Christian, 4710 Grieskirchen (AT); PRECHTL, Wolfgang, 4710 Grieskirchen (AT); VORABERGER, Alois, 4710 Grieskirchen (AT)
(74) Vertreter: Meissner Bolte Partnerschaft mbB
(86) Internationale Anmeldenummer: PCT/EP2020/066433
(87) Internationale Veröffentlichungsnummer: WO 2020/254223

(56) Entgegenhaltungen:
- EP-A1- 2 695 512
- DE-A1- 102011 003 727
- DE-A1- 2 251 454
- DE-U1- 202006 008 946

## Beschreibung

Die vorliegende Erfindung betrifft einen Riemen mit einem ersten Riemenende und zweiten Riemenende, die miteinander verbunden sind. Außerdem betritt die Erfindung eine Riemenanlage mit einem derartigen Riemen.

In der Landwirtschaft werden sogenannte Rundballenpressen eingesetzt, um halmförmiges Erntegut zu Ballen zu pressen. Hierzu wird das Erntegut in den Ballenpressraum befördert und durch diesen umgebende Pressmittel wie z.B. Pressriemen zu einem zylindrischen Ballen verpresst, welcher bei Erreichen einer vorgegebenen Größe auf das Feld ausgebracht wird. Derartige Rundballenpressen sind z.B. aus der DE 10 2011 003 727 A1, aus der EP 2 695 512 A1, aus der US 3,964,246 A sowie aus der US 5,415,913 A bekannt. Derartige Rundballenpressen mit variabler Ballenpresskammer, kurz auch als Presskammer bezeichnet, finden vorzugsweise im Agrarbereich ihren Einsatz, sind jedoch grundsätzlich auch zur Pressung zu Rundballen von jeglichem faserigen Material geeignet wie z.B. etwa von Abfall-, Folien- oder Geweberückstände im Bereich der Entsorgungstechnik.

Pressriemen bestehen üblicherweise aus einem in einem Elastomer eingebetteten linienförmigen bzw. flächigen Zugträger, welcher die Aufgabe der Ballenrotation bei gleichzeitiger Kompression der äußeren Materialschichten auf den sich rotierenden Ballenkern übernimmt. Als Zugträger können insbesondere flächige Textilien als auch in der Bewegungsrichtung verlaufende Stahlseile verwendet werden.

Die Pressriemen können offen hergestellt und dann z.B. mittels mechanischer Verbindungselemente z.B. formschlüssig oder auch stoffschlüssig geschlossen werden, siehe z.B. US 5,415,913 A oder auch DE 20 2006 008 946 U1. Alternativ können die Pressriemen auch bereits geschlossen hergestellt werden. Im Betrieb sind die Pressriemen in jedem Fall endlos geschlossen und verlaufen parallel zueinander.

Die Pressriemen werden in der Form genutzt, dass der bzw. die Pressriemen durch Umlauf in der Presse mittels Rollenführung einen zuvor durch die Materialaufnahme der Rundballenpresse zugeführten "Kern" in Rotation versetzt bzw. versetzen (Startprozess) und im weiteren Verlauf das über die Aufnahmewalze der Presskammer weiterhin zugeführte Material kontinuierlich auf den sich mittels des Pressriemens bzw. der Pressriemen bereits rotierenden Kern als Materialschicht presst bzw. pressen. Übliche Presskammern besitzen allgemein eine Breite von ca. 1,2 m bei üblichen Riemenlängen von ca. 10 m bis ca. 15 m. Über diese endlose Länge werden selbige Riemen über eine pressenspezifische Anzahl von Rollen bzw. Walzen geführt, deren Anzahl im Mittel mit zwölf Stück beziffert werden kann. Der bzw. die Riemen läuft bzw. laufen überweise mit einer Geschwindigkeit von ca. 3 m/s um. Eine seitliche Führung des bzw. der Riemen wird dabei üblicherweise durch den Einsatz von starren seitlichen Führungselementen umgesetzt, siehe z.B. DE 10 2011 003 727 A1, EP 2 695 512 A1 und US 3,964,246 A.

Aus dem Dokument DE 2 251 454 A ist ein Riemen aus elastischem Riemenmaterial und Zugträgerverstärkungen bekannt.

Aus dem Dokument AT 199443 ist ein als Flach- oder Keilriemen ausgebildeter Treibriemen aus mindestens einem faserorientierten Kunststoffband und mindestens einem mit diesem verbundenen Laufband aus zugfestem, adhäsiven Material bekannt.

Innerhalb heutiger Rundballenpressen werden üblicherweise lediglich ein Riemen bei einer Monoriemenpresse bis hin zu sechs Riemen bei sonstigen Rundballenpressen eingesetzt. Die jeweilige Riemenbreite bei vollflächiger Ausbildung der Pressoberfläche durch den bzw. die Riemen kann hierbei näherungsweise als Quotient der Presskammerbreite und der Anzahl der vorhandenen Riemen in der Rundballenpresse ermittelt werden. Die Riemen werden hierbei zumeist reibschlüssig mittels mindestens einer Antriebswalze angetrieben.

Es ist bekannt, dass vergleichsweise breite Rundballenpressbänder mit Breiten von deutlich mehr als ca. 220 mm und Längen von mehr als ca. 14 m bei Verwendung einer durchgehenden Hakenverbinderlösung bei bestimmungsgemäßer Verwendung häufiger versagen als schmalere Rundballenpressbänder.

Als eine Ursache hierfür kann häufig ein sich aufbauendes Pressmaterial auf einzelnen Rollen bzw. Rollenbereichen der Rundballenpresse betrachtet werden. Dieser Materialaufbau kann ein Quer-Knicken der Verbindung beim Trommelumlauf zur Folge haben, welches zu einem Versagen der Verbindung führen kann.

Auch weist eine Rundballenpresse gegenüber klassischen Transportbandanwendungen, welche über eine feststehende Anordnung von Rollen über vergleichsweise große Längen laufen, wie zuvor erwähnt ein vergleichsweise kurzes Pressband sowie eine deutlich größere Anzahl von Rollen auf, welche ferner teilweise beweglich sind, um den Aufbau des Rundballens zu ermöglichen. Dies führt dazu, dass das Rundballenpressband einer vergleichsweise hohen Zahl von Lastwechseln ausgesetzt ist. Auch weisen die Rollen einer Rundballenpresse vergleichsweise geringe Durchmesser auf. Insbesondere die kurze Länge und die hohe Anzahl von Umlenkpunkten innerhalb der Rundballenpresse kann dazu führen, dass ein Dehnungsausgleich des Pressriemens zur Kompensation der extern eingeprägten Zusatzdehnung sowie auch bei etwaiger vorliegender schiefer Verbindungserstellung innerhalb des Riemens nur unzureichend erfolgen kann.

Diese beiden Effekte können daher zu lokalen dynamischen Lastspitzen führen, deren Effekt eine deutliche Reduktion der dynamischen Verbindungsfestigkeit darstellen kann.

Zur Vermeidung bzw. Reduzierung derartiger dynamischer Lastspitzen werden bisher schmalere Riemen verwendet. Auch kann versucht werden, die Verbindung selbst flexibler zu gestalten, wozu flexiblere Seil-Verbinder statt steifer Stangen-Verbinder verwendet werden können.

Derartige Seillösungen weisen jedoch andere Nachteile auf, zu denen ein erhöhter Hakenverschleiß gehört, da das Seil als Verbindungselement wie eine Säge bzw. Feile auf die Hakenverbinder wirken und somit zu einer anderen Art des Verbindungsausfalls führen kann. Zudem wird das Problem lokaler Lastspitzen in der Hakenverbindung beim Trommelumlauf ebenfalls nicht effektiv gelöst.

Alternativ kann auch eine stoffschlüssige Verbindung zum Schließen des Pressriemens verwendet werden. Hierzu können die Enden in der Höhe aufeinandergelegt und z.B. durch Kleben oder durch Vulkanisation miteinander verbunden werden. Gerade im letzteren Fall kann dabei die Breite der Verbindungsstelle von der Größe des Werkzeugs abhängen, welches bei einer Heizvulkanisation ein Heizwerkzeug sein kann. Somit wird die maximale Breite des Pressriemens durch die maximale Länge des Heizwerkzeugs in der Querrichtung des Pressriemens bestimmt und damit eingeschränkt. Auch kann die Einbausituation des Pressriemens innerhalb der Presse bei der Montage stark von den Abständen der fest installierten Rollen selbst abhängen und diese folglich ebenfalls einschränken.

Eine Aufgabe der vorliegenden Erfindung ist es, einen Riemen der eingangs beschriebenen Art mit verbesserter Lebensdauer bereit zu stellen. Insbesondere soll dies für Riemen von Rundballenpressen erreicht werden. Dies soll möglichst einfach und bzw. oder kostengünstig erreicht werden. Zumindest soll eine Alternative zu bekannten derartigen Riemen bereitgestellt werden.

Gemäß einem ersten Aspekt der Erfindung wird die Aufgabe durch einen Riemen mit den Merkmalen gemäß Patentanspruch 1 gelöst. Gemäß einem zweiten Aspekt der Erfindung wird die Aufgabe durch einen Riemen mit den Merkmalen des Anspruchs 2 gelöst. Und gemäß einem dritten Aspekt der Erfindung wird die Aufgabe gelöst durch eine Riemenanlage, vorzugsweise durch eine Rundballenpresse, mit den Merkmalen gemäß Patentanspruch 15 . Vorteilhafte Weiterbildungen sind in den Unteransprüchen 3 bis 14 beschrieben.

Unter einem Riemen wird ein in sich endlos geschlossenes oder schließbares flexibles Band zur Kraftübertragung verstanden, welches auch allgemein als Gurt bezeichnet werden kann. Je nach Anwendungsfall kann ein Riemen auch als Treibriemen, Förderband, Transportband, Fördergurt und insbesondere als Pressriemen oder als Rundballenpressbänder bezeichnet werden. Ein Riemen kann auch ein Riemensegment sein, welche mit wenigstens einem weiteren Riemensegment verbunden und ggfs. endlos geschlossen werden kann.

Somit betrifft die vorliegende Erfindung gemäß dem ersten Aspekt einen Riemen mit einem ersten Riemenende und mit einem zweiten Riemenende, wobei die beiden Riemenenden miteinander verbunden sind.

Wie eingangs beschrieben werden die beiden Riemenenden derartiger Riemen bisher üblicherweise mittels eines in der Querrichtung durchgängigen Verbindungselements miteinander verbunden. Als Verbindungselement kann beispielsweise eine Mehrzahl von Haken verwendet werden, welche z.B. jeweils etwa halbrund gebogen mit ihrer Rundung einander zugewandt angeordnet werden. Beispielsweise können die beiden jeweils offenen Enden eines Hakens in der vertikalen Richtung von oben und von unten in das Material des Riemens eingreifen und so den Haken halten. Die offenen Enden der Haken beider Riemenenden können dann einander abwechselnd überlappend zusammengelegt und in der Querrichtung durch ein starres Kopplungselement wie z.B. durch einen Stab formschlüssig gehalten werden.

Hierbei kann es aufgrund erhöhter Wechselbiegungen zu einem dynamischen Bruch des starren Verbindungselements kommen. Auch kann bei extremster Überlast ein Sprödbruch auftreten. Ferner kann es zu einzelnen Hakenausrissen durch lokale Überlastung einzelner Hakensegmente beim Trommelumlauf kommen, welche als dynamisches Versagen aufgrund von lokaler Überlastung einzelner Haken innerhalb des Verbindungselements auftreten können.

Diese Nachteile können zwar durch die Verwendung eines Seils als Kopplungselement vermieden werden, wie eingangs beschrieben, können jedoch aus anderen zuvor beschriebenen Gründen zu einem Verschleiß der Haken führen und somit die Lebensdauer des Riemens bzw. dessen Verbindungsstelle nicht zufriedenstellend erhöhen.

Der erfindungsgemäße Riemen gemäß dem ersten Aspekt der Erfindung zeichnet sich dadurch aus, dass das erste Riemenende wenigstens ein erstes Segment und ein zweites Segment aufweist und dass das zweite Riemenende wenigstens ein erstes Segment und ein zweites Segment aufweist, wobei das erste Segment des ersten Riemenendes mit dem ersten Segment des zweiten Riemenendes mittels wenigstens eines Verbindungselements verbunden ist, und wobei das zweite Segment des ersten Riemenendes mit dem zweiten Segment des zweiten Riemenendes mittels wenigstens eines weiteren Verbindungselements verbunden ist, wobei das erste Segment des ersten Riemenendes gegenüber dem zweiten Segment des ersten Riemenendes in der Längsrichtung abschnittsweise versetzt angeordnet ist, und wobei das erste Segment des zweiten Riemenendes gegenüber dem zweiten Segment des zweiten Riemenendes in der Längsrichtung abschnittsweise versetzt angeordnet ist. Es können pro Riemenende auch mehr als zwei Segmente ausgebildet werden.

Unter einem Segment eines Riemenendes wird vorzugsweise eine vom Riemen gebildete, sich in Längsrichtung erstreckende Lasche verstanden. Somit kann die jeweilige Lasche in Längsrichtung über den übrigen, zugehörigen Riemen hervorragen. Jedes Segment weist vorzugsweise eine rechteckige Grundform auf. Außerdem kann jedes Segment drei Außenkanten aufweisen. Eine der Außenkanten kann in Querrichtung verlaufen, wobei die beiden anderen Außenkanten in Längsrichtung verlaufen können.

Der Riemen kann mit Ausnahme der Verbindungselemente zumindest mit oder ausschließlich aus einem faserverstärkten Gummimaterial gebildet sein. Außerdem ist es bevorzugt vorgesehen, dass der Riemen sowohl das erste Riemenende als auch das zweite Riemenende bildet. Die Segmente der Riemenenden können somit ebenfalls von dem Riemen gebildet sein. Ist der Riemen mit Ausnahme der Verbindungselemente vorzugsweise ausschließlich von dem faserverstärkten Gummimaterial gebildet, so sind in diesem Fall auch die Segmente des Riemens von dem gleichen, faserverstärkten Gummimaterial gebildet.

Vorzugsweise verlaufen die Segmente eines Riemenendes in der Längsrichtung parallel zueinander, erstrecken sich dabei jedoch unterschiedlich weit. Die einander in der Längsrichtung gegenüberliegenden Segmente der beiden Riemenenden werden dann mit jeweils einem eigenen Verbindungselement miteinander verbunden. Hierdurch können die Verbindungsstellen der jeweiligen Segmente in der Längsrichtung zueinander versetzt angeordnet werden, so dass nicht beide Verbindungsstellen gleichzeitig mit einer Rolle einer Riemenanlage, auf welcher der Riemen genutzt wird, in Kontakt kommen. Dies kann die Einleitung von Kräften in den Riemen ebenso in der Längsrichtung des Riemens verteilen wie die Impulse, welche aus einer Kontaktaufnahme eines Riemens mit einer Rolle einhergehen können. Dies kann die Lebensdauer des Riemens erhöhen.

Die Segmente eines Riemenendes können dabei unterschiedliche Konturen bzw. Verläufe aufweisen, sofern hierdurch eine Verbindung der einander in der Längsrichtung des Riemens gegenüberliegenden Segmentenden miteinander verbunden werden können. Wie weiter unten näher beschrieben werden wird, kann die einander in der Längsrichtung des Riemens gegenüberliegenden Segmentenden geradlinig in der Querrichtung ausgebildet sein, so dass insbesondere eine Hakenverbindung als Verbindungselement verwendet werden kann. Die einander in der Längsrichtung des Riemens gegenüberliegenden Segmentenden können jedoch auch schrägverlaufend, gezackt, gewellt, keilförmig, stufig versetzt und dergleichen ausgebildet sein, so dass insbesondere eine stoffschlüssige Verbindung z.B. durch Kleben, durch Kaltvulkanisation oder durch Heißvulkanisation verwendet werden kann. Hierdurch kann die Länge der Verbindung erhöht und hierdurch die Stabilität und Langlebigkeit der Verbindung verbessert werden.

Insbesondere kann hierdurch die Ausrichtung des Nahtstreifens der stoffschlüssigen Verbindung zur Laufrichtung des Pressriemens beeinflusst werden, so dass der Nahtstreifen z.B. bei einer schrägen Ausrichtung zur Laufrichtung stets nur punktartig einen Kontakt mit der Rolle aufnimmt bzw. sich von der Rolle löst. Hierdurch können die Impulse auf die Verbindung über deren Erstreckung verteilt werden, was sich ebenfalls positiv auf die Stabilität und Langlebigkeit der Verbindung auswirken kann.

Die Segmentierung der Verbindung samt Riemenenden an sich ermöglicht ein einfaches lokales Ausweichen der jeweils miteinander in der Längsrichtung verbundenen Segmente und damit einen erleichterten Dehnungsausgleich der durch den aus der Beanspruchung ausweichenden, d.h. ausdrehenden, miteinander in der Längsrichtung verbundenen Segmente. Dieses kann analog zu einer Entlastung des jeweiligen Kopplungselements, insbesondere bei der Verwendung eines starren Verbindungsstabs, und der Zuglast führen, welche z.B. über diesen Stab zwischen den einzelnen Haken übertragen wird. Hierdurch kann die Lebensdauer des Riemens bzw. dessen Verbindungsstellen erhöht werden.

Vorteilhaft ist auch, dass der Einsatz einer durch einen Seilverbinder zusätzlichen schleißenden Reibpaarungen zwischen Haken und Seil vermieden werden kann. Mit anderen Worten kann jeweils ein starres Kopplungselement wie z.B. ein starrer Stab verwendet werden, da dessen eingangs beschriebenen Nachteile durch die Aufteilung der Verbindungsstelle vermieden oder zumindest reduziert werden können. Hierdurch können die Nachteile eines flexiblen Kopplungselements wie z.B. eines Seils vermieden werden.

Vorteilhaft ist ferner, dass die bisher bekannte und erprobte Hakenverpresstechnik mit Verbinderbreiten von bis zu ca. 220 mm auch bei Riemen mit deutlich größeren Gesamtbreite weiterhin ihren Einsatz finden kann, da jeweils einzelne Verbindungsstellen dieser Breite verpresst werden können.

Für bestehende Rundballenpressentypen mit reduzierter Pressriemenzahl bei gleichzeitig größerer Pressriemenbreite in endlosgewickelter Ausführung kann auf diese Art und Weise eine für den ggf. erforderlichen Reparaturservice im Feld z.B. bei Riemenschäden durch externe Beschädigung eine sowohl in Sachen Herstellbarkeit als auch in Sachen Servicefreundlichkeit technische Lösung angeboten werden, die ohne einen größeren Montageaufwand einen Einzug eines erfindungsgemäßen Ersatz-Riemens in der Rundballenpresse ermöglichen kann. Zudem kann hierdurch auch der Austausch von einzelnen Riemen in einem bestehenden Riemensatz in einer derartigen Rundballenpresse ermöglicht werden.

Die vorliegende Erfindung kann dabei auf jede Art hoch beanspruchten, insbesondere durch zahlreiche Lastwechsel, und im Verhältnis von Breite zur endlosen Länge ungünstig gestaltete Riemen-, Gurt- sowie Transportbandlösungen, insbesondere bei einem Verhältnis von Breite zu Länge von deutlich größer als 0,15, anwendbar und gerade dort aus den zuvor beschriebenen Gründen vorteilhaft sein. Insbesondere können diese Vorteile bei Rundballenpressen mit durch den Einsatz von Pressriemen gestalteter variabler Presskammer im Agra- wie im Abfall-Sektor zur Geltung kommen.

Für den Riemen gemäß dem ersten Aspekt der Erfindung ist es außerdem vorgesehen, dass das erste Segment des ersten Riemenendes und das zweite Segment des ersten Riemenendes in der Querrichtung durch eine Materialunterbrechung voneinander getrennt und bzw. oder das erste Segment des zweiten Riemenendes und das zweite Segment des zweiten Riemenendes in der Querrichtung durch eine Materialunterbrechung voneinander getrennt sind.

Vorzugsweise wird wenigstens eines der beiden einander zugewandten Riemenenden oder werden beide einander zugewandten Riemenenden jeweils wenigstens zweigeteilt ausgebildet, so dass jedes Riemenende wenigstens zwei parallel zueinander angeordnete und sich zumindest im Wesentlichen in der Längsrichtung erstreckende Segmente aufweist. Die einander in der Längsrichtung gegenüberliegenden Segmente der beiden Riemenenden werden dann mit jeweils einem eigenen Verbindungselement miteinander verbunden. Es können durch entsprechende Materialunterbrechungen auch mehr als zwei Segmente pro Riemenende ausgebildet sein.

Die Segmente eines Riemenendes sind dabei in der Querrichtung durch eine Materialunterbrechung voneinander getrennt, was durch einen Schnitt in der Längsrichtung durch das Material des Riemens ebenso realisiert werden kann wie durch eine derartige Materialaussparung, welche auch als Lücke bezeichnet werden kann. Die beiden Verbindungselemente sind dabei ebenfalls in der Querrichtung voneinander getrennt, wozu die beiden Verbindungselemente separat ausgebildet und unabhängig voneinander angewendet werden können. Vorzugsweise erfolgt eine Aufteilung der Verbindung zwischen den beiden Riemenenden in mindestens zwei oder mehr einzelne voneinander getrennte Segmentbereiche.

Die Segmentierung der Verbindung samt Riemenenden an sich durch eine derartige Materialunterbrechung kann ein einfaches lokales Ausweichen der jeweils miteinander in der Längsrichtung verbundenen Segmente und den hierdurch erleichterten Dehnungsausgleich der durch den aus der Beanspruchung ausweichenden, d.h. ausdrehenden, miteinander in der Längsrichtung verbundenen Segmente verbessern, da die Verbindungselemente durch die Materialunterbrechung einen größeren Bewegungsspielraum erhalten. Dieses kann analog zu einer besonders wirkungsvollen Entlastung des jeweiligen Kopplungselements, insbesondere bei der Verwendung eines starren Verbindungsstabs, und der Zuglast führen, welche z.B. über diesen Stab zwischen den einzelnen Haken übertragen wird. Hierdurch kann die Lebensdauer des Riemens bzw. dessen Verbindungsstellen weiter erhöht werden.

Der erfindungsgemäße Riemen gemäß dem zweiten Aspekt der Erfindung zeichnet sich dadurch aus, dass die beiden Riemenenden miteinander verbunden sind, wobei das erste Riemenende wenigstens ein erstes Segment und ein zweites Segment aufweist, wobei das zweite Riemenende wenigstens ein erstes Segment und ein zweites Segment aufweist, wobei das erste Segment des ersten Riemenendes mit dem ersten Segment des zweiten Riemenendes mittels wenigstens eines Verbindungselements verbunden ist, und wobei das zweite Segment des ersten Riemenendes mit dem zweiten Segment des zweiten Riemenendes mittels wenigstens eines weiteren Verbindungselements verbunden ist, und wobei das erste Segment des ersten Riemenendes und das zweite Segment des ersten Riemenendes in der Querrichtung durch eine Materialunterbrechung voneinander getrennt sind und das erste Segment des zweiten Riemenendes und das zweite Segment des zweiten Riemenendes in der Querrichtung durch eine Materialunterbrechung voneinander getrennt sind.

Für den Riemen gemäß dem zweiten Aspekt der Erfindung wird auf die vorangegangenen Erläuterungen, bevorzugten Merkmale, Effekte und Vorteile zumindest in analoger Weise Bezug genommen, wie sie für den Riemen gemäß dem ersten Aspekt der Erfindung zuvor beschrieben worden sind, und zwar mit Ausnahme der Erläuterungen, die sich auf den Versatz der Segmente in Längsrichtung beziehen. Denn der erfindungsgemäße Riemen gemäß dem zweiten Aspekt der Erfindung zeichnet sich außerdem dadurch aus, dass das erste Segment des ersten Riemenendes gegenüber dem zweiten Segment des ersten Riemenendes in der Längsrichtung versatzfrei angeordnet ist, wobei das erste Segment des zweiten Riemenendes gegenüber dem zweiten Segment des zweiten Riemenendes in der Längsrichtung ebenfalls versatzfrei angeordnet ist.

Das erste und zweite Segment des ersten Riemenendes können sich in Längsrichtung gleich weit erstrecken. Sie können also in Längsrichtung des Riemens gleich weit über den übrigen Riemen hervorragen. Sofern die beiden Segmente des ersten Riemenendes jeweils eine rechteckige Grundform aufweisen, können ihre vom Riemen abgewandten Segmentenden in Querrichtung fluchtend zueinander sein. Diese Segmentenden haben deshalb in Längsrichtung keinen Versatz zueinander. Vielmehr sind sie versatzfrei in Längsrichtung angeordnet.

Für das erste und zweite Segmentende des zweiten Riemenendes können die vorherigen, bevorzugten Erläuterungen zumindest in analoger Weise gelten. So ist es bevorzugt vorgesehen, dass sich das erste und zweite Segment des zweiten Riemenendes in Längsrichtung gleich weit erstrecken. Sie können also in Längsrichtung des Riemens gleich weit über den übrigen Riemen hervorragen. Sofern die beiden Segmente des zweiten Riemenendes jeweils eine rechteckige Grundform aufweisen, können ihre vom Riemen abgewandten Segmentenden in Querrichtung fluchtend zueinander sein. Diese Segmentenden haben deshalb in Längsrichtung keinen Versatz zueinander. Vielmehr sind sie versatzfrei in Längsrichtung angeordnet.

Die Segmente jedes der beiden Riemenenden sind dabei in der Querrichtung durch eine zugehörige Materialunterbrechung voneinander getrennt. Daraus ergibt sich, dass auch die beiden Verbindungselemente in der Querrichtung voneinander getrennt sind. Die beiden Verbindungselemente sind also separat ausgebildet.

Die Segmente an den Riemenenden und die separat ausgebildeten Verbindungselemente gewährleisten ein einfaches lokales Ausweichen der jeweils miteinander in der Längsrichtung verbundenen Segmente und den hierdurch erleichterten Dehnungsausgleich der durch den aus der Beanspruchung ausweichenden, d.h. ausdrehenden, miteinander in der Längsrichtung verbundenen Segmente verbessern, da die Verbindungselemente durch die Materialunterbrechung einen größeren Bewegungsspielraum erhalten. Dieses kann analog zu einer besonders wirkungsvollen Entlastung des jeweiligen Kopplungselements, insbesondere bei der Verwendung eines starren Verbindungsstabs, und der Zuglast führen, welche z.B. über diesen Stab zwischen den einzelnen Haken übertragen wird. Hierdurch kann die Lebensdauer des Riemens bzw. dessen Verbindungsstellen weiter erhöht werden.

Gemäß einer vorteilhaften Ausgestaltung des Riemens nach dem ersten Aspekt der Erfindung ist das Verbindungselement zwischen den ersten Segmenten der beiden Riemenenden in der Längsrichtung um einen vorbestimmten Versatz versetzt gegenüber dem Verbindungselement zwischen den zweiten Segmenten der beiden Riemenenden angeordnet. Hierdurch können die zuvor beschriebenen Eigenschaften einer versetzten Anordnung der beiden Verbindungsstellen vorbestimmt und damit definiert erreicht werden.

Gemäß einer weiteren, vorteilhaften Ausgestaltung des Riemens nach dem ersten Aspekt der Erfindung ist der Versatz in der Längsrichtung derart gewählt, dass bei Verwendung des Riemens auf einer Riemenanlage immer nur ein Verbindungselement Kontakt mit einer Rolle der Riemenanlage haben kann. Mit anderen Worten liegen die beiden Verbindungsstellen in der Längsrichtung ausreichend weit auseinander, so dass eine der beiden Verbindungsstellen stets ohne Kontakt zu einer Rolle ist, auch wenn die andere Verbindungsstelle in diesem Moment gerade Kontakt zu einer Rolle hat. Vorzugsweise liegen die beiden Verbindungsstellen bzw. die beiden Verbindungselemente dabei in der Längsrichtung nicht weiter auseinander als hierfür erforderlich. In jedem Fall kann die entsprechende Anordnung vom Fachmann in Abhängigkeit des Anwendungsfalls, für den der Riemen bestimmt ist, wie zuvor beschrieben vorgenommen werden.

Auf diese Art und Weise kann sichergestellt werden, dass die Kräfte bzw. der Impuls eines Kontakts zwischen einem Verbindungselement bzw. einer Verbindungsstelle und einer Rolle immer nur gleichzeitig auf das Verbindungselement bzw. auf die Verbindungsstelle eines Segments wirken kann, da gleichzeitig das andere parallel angeordnete Segment selbst einen durchgängigen Kontakt mit der Rolle hat und somit hier keine Kräfte bzw. Impulse auf dessen Verbindungselement bzw. Verbindungsstelle wirken können. Dies kann das Verbindungselement, welches in Kontakt mit der Rolle steht, hinsichtlich Kräften bzw. Impulsen entlasten und somit dessen Langlebigkeit fördern.

Gemäß einer vorteilhaften Ausgestaltung des Riemens nach dem ersten und/oder zweiten Aspekt der Erfindung sind die beiden Riemenenden ausschließlich in der Längsrichtung miteinander verbunden. Dies kann die Kraftübertragung in der Längsrichtung als Bewegungsrichtung des Riemens begünstigen und in der Querrichtung wirkende Kräfte, welche zu einem Schräglauf des Riemens führen könnten, vermeiden helfen.

Gemäß einer vorteilhaften Ausgestaltung des Riemens nach dem ersten und/oder zweiten Aspekt der Erfindung ist das erste Segment des ersten Riemenendes ausschließlich mit dem ersten Segment des zweiten Riemenendes verbunden und das zweite Segment des ersten Riemenendes ist ausschließlich mit dem zweiten Segment des zweiten Riemenendes verbunden. Hierdurch kann eine Kraftübertragung in der Querrichtung sicher ausgeschlossen werden, so dass die zuvor beschrieben Ausweichbewegungen der beiden jeweils in der Längsrichtung miteinander verbunden Segmente gegenüber einander in der Querrichtung sicher und bzw. oder über eine möglichst große Länge erfolgen können.

Gemäß einer vorteilhaften Ausgestaltung des Riemens nach dem ersten und/oder zweiten Aspekt der Erfindung sind die Segmente des ersten Riemenendes durch eine erste Materialunterbrechung voneinander getrennt, wobei die Segmente des zweiten Riemenendes durch eine zweite Materialunterbrechung voneinander getrennt sind. Die erste Materialunterbrechung und die zweite Materialunterbrechung können eine gemeinsame Materialunterbrechung bilden. Die gemeinsame Materialunterbrechung kann sich somit von dem ersten Riemenende zum zweiten Riemenende erstrecken. Durch die vorzugsweise separate Ausgestaltung der Verbindungselemente kann sich die Materialunterbrechung auch durch einen Zwischenraum zwischen den Verbindungselementen hindurch erstrecken. Die gemeinsame Materialunterbrechung kann somit eine gemeinsame, durchgehende Materialunterbrechung bilden.

Gemäß einer vorteilhaften Ausgestaltung des Riemens nach dem ersten und/oder zweiten Aspekt der Erfindung sind die Segmente des ersten Riemenendes und die Segmente des zweiten Riemenendes durch eine gemeinsame Materialunterbrechung voneinander getrennt. Dies kann eine Materialunterbrechung über die gesamte Länge der jeweils in der Längsrichtung miteinander verbundenen Segmente gegenüber einander in der Querrichtung ermöglichen. Insbesondere kann das Ausweichen über die gesamte Länge stattfinden und somit zu einem möglichst wirkungsvollen Ausgleich führen.

Gemäß einer vorteilhaften Ausgestaltung des Riemens nach dem ersten und/oder zweiten Aspekt der Erfindung ist die Materialunterbrechung bzw. sind die Materialunterbrechungen als Aussparung bzw. Aussparungen zwischen den beiden Riemenende ausgebildet. Hierdurch kann ein zusätzlicher Freiraum in der Querrichtung geschaffen werden, welcher das Ausweichen verbessern kann, sodass ein möglichst wirkungsvolles Ausgleichen erfolgen kann.

Gemäß einer vorteilhaften Ausgestaltung des Riemens nach dem ersten und/oder zweiten Aspekt der Erfindung ist das erste Segment des ersten Riemenendes gegenüber dem zweiten Segment des ersten Riemenendes durch die Aussparung in der Querrichtung beabstandet angeordnet und das erste Segment des zweiten Riemenendes ist gegenüber dem zweiten Segment des zweiten Riemenendes durch die Aussparung in der Querrichtung beabstandet angeordnet. Hierdurch können die zuvor beschrieben Eigenschaften und Vorteile besonders wirkungsvoll umgesetzt werden.

Gemäß einer vorteilhaften Ausgestaltung des Riemens nach dem ersten und/oder zweiten Aspekt der Erfindung weist das erste Segment des ersten Riemenendes eine erste, mittlere Segmentbreite in der Querrichtung auf, wobei die Aussparung zwischen dem ersten Segment des ersten Riemenendes und dem zweiten Segment des ersten Riemenendes eine erste, mittlere Aussparungsbreite in der Querrichtung aufweist, die kleiner als die erste Segmentbreite ist. An den Riemenenden kann die Kraftübertragung in Längsrichtung des Riemens nur über die Segmente der Riemenenden erfolgen. Umso kleiner die Aussparungen bzw. die Materialunterbrechungen sind, desto größere Kräfte können in Längsrichtung über die Segmente der Riemenenden übertragen werden. Indem das erste Segment breiter als die Aussparung zwischen dem ersten und zweiten Segment ist, kann eine große Kraftübertragung in Längsrichtung gewährleistet werden. Dies gilt insbesondere dann, wenn das erste und zweite Segment gleich breit sind.

Gemäß einer vorteilhaften Ausgestaltung des Riemens nach dem ersten und/oder zweiten Aspekt der Erfindung ist die erste Segmentbreite zwischen 1450 mm und 1550 mm, vorzugsweise zwischen 1100 mm und 1180 mm, besonders bevorzugt zwischen 520 mm und 590 mm, weiter bevorzugt zwischen 350 mm und 390 mm. Das zweite Segment des ersten Riemenendes kann eine zweite, mittlere Segmentbreite in der Querrichtung aufweisen. Das erste Segment des zweiten Riemenendes kann eine dritte, mittlere Segmentbreite in der Querrichtung aufweisen. Das zweite Segment des zweiten Riemenendes kann eine vierte, mittlere Segmentbreite in der Querrichtung aufweisen. Die zweite, dritte und vierte Segmentbreite können jeweils der ersten Segmentbreite entsprechen. Damit können gegenüberliegend angeordnete Segmente die gleiche Breite aufweisen.

Gemäß einer vorteilhaften Ausgestaltung des Riemens nach dem ersten und/oder zweiten Aspekt der Erfindung ist die erste Aussparungsbreite zwischen 5 mm und 50 mm, vorzugsweise zwischen 10 mm und 30 mm, besonders bevorzugt 20 mm. Die Aussparung zwischen dem ersten Segment des zweiten Riemenendes und dem zweiten Segment des zweiten Riemenendes kann eine zweite, mittlere Aussparungsbreite in der Querrichtung aufweisen. Vorzugsweise sind die erste und zweite Aussparungsbreite zumindest im Wesentlichen gleich breit. Die erste und/oder zweite Aussparungsbreite sind im Vergleich zu der ersten Segmentbreite bzw. der dritten Segmentbreite deutlich kleiner. Das erlaubt eine besonders hohe Kraftübertragung in Längsrichtung des Riemens.

Gemäß einer vorteilhaften Ausgestaltung des Riemens nach dem ersten und/oder zweiten Aspekt der Erfindung beträgt die erste Aussparungsbreite maximal 50% der ersten Segmentbreite, vorzugsweise maximal 25% der ersten Segmentbreite, besonders bevorzugt maximal 10% der ersten Segmentbreite. Für die zweite Aussparungsbreite kann im Verhältnis zur dritten Segmentbreite entsprechendes gelten. Die erste und/oder zweite Aussparungsbreite wird somit sinnvoll begrenzt, um die hohe Kraftübertragung in Längsrichtung des Riemens zu erlauben.

Gemäß einer vorteilhaften Ausgestaltung des Riemens nach dem ersten und/oder zweiten Aspekt der Erfindung beträgt die erste Aussparungsbreite mindestens 2% der ersten Segmentbreite, vorzugsweise mindestens 5% der ersten Segmentbreite oder besonders bevorzugt mindestens 10% der ersten Segmentbreite. Für die zweite Aussparungsbreite kann im Verhältnis zur dritten Segmentbreite entsprechendes gelten.

Gemäß einer vorteilhaften Ausgestaltung des Riemens nach dem ersten und/oder zweiten Aspekt der Erfindung sind das erste Segment des ersten Riemenendes und das zweite Segment des ersten Riemenendes in Querrichtung zumindest im Wesentlichen gleich breit. Dadurch kann eine symmetrische Verbindung zwischen dem ersten Riemenende und dem zweiten Riemenende hergestellt werden. Außerdem erlaubt diese Ausgestaltung die gemeinsame, durchgehende Materialunterbrechung zwischen dem ersten und zweiten Riemenende.

Gemäß einer vorteilhaften Ausgestaltung des Riemens nach dem ersten und/oder zweiten Aspekt der Erfindung weist das erste Segment des zweiten Riemenendes eine zweite, mittlere Segmentbreite in der Querrichtung auf, wobei die Aussparung zwischen dem ersten Segment des zweiten Riemenendes und dem zweiten Segment des zweiten Riemenendes eine zweite, mittlere Aussparungsbreite in der Querrichtung aufweist, die kleiner als die zweite Segmentbreite ist. Auf die Vorteile und technischen Effekte, wie sie im Zusammenhang mit der erste Segmentbreite bereits erläutert worden sind, wird in analoger Weise für diese Ausgestaltung Bezug genommen.

Gemäß einer vorteilhaften Ausgestaltung des Riemens nach dem ersten und/oder zweiten Aspekt der Erfindung ist es vorgesehen, dass das erste Segment des ersten Riemenendes und das erste Segment des zweiten Riemenendes in Querrichtung zumindest im Wesentlichen gleich breit sind, und dass das zweite Segment des ersten Riemenendes und das zweite Segment des zweiten Riemenendes in Querrichtung zumindest im Wesentlichen gleich breit sind. Auch diese Ausgestaltung kann eine symmetrische Verbindung zwischen den Riemenenden gewährleisten und die gemeinsame, durchgehende Materialunterbrechung erlauben. Außerdem kann eine symmetrische Verteilung der in Längsrichtung wirkenden Kräfte gewährleistet werden, was einen guten Rundlauf zumindest unterstützt.

Gemäß einer vorteilhaften Ausgestaltung des Riemens nach dem ersten und/oder zweiten Aspekt der Erfindung sind die erste Aussparungsbreite und die zweite Aussparungsbreite in Querrichtung zumindest im Wesentlichen gleich breit. Die zuvor genannten Vorteile und technischen Effekte gelten für diese Ausgestaltung in analoger Weise.

Gemäß einer vorteilhaften Ausgestaltung des Riemens nach dem ersten und/oder zweiten Aspekt der Erfindung weist die Aussparung bzw. weisen die Aussparungen in der Längsrichtung wenigstens einseitig, vorzugsweise beidseitig, am Ende ihrer Erstreckung eine kreisförmige Aufweitung auf. Hierdurch können Kräfte innerhalb des Riemens bzw. innerhalb des Materials des Riemens besser verteilt übertragen werden. Dies kann Kraftspitzen, welche zu Belastungen des Riemens bzw. dessen Materials führen können, welche diesen bzw. dieses beschädigen können, vermeiden helfen.

Gemäß einer vorteilhaften Ausgestaltung des Riemens nach dem ersten und/oder zweiten Aspekt der Erfindung wird das jeweilige Riemenende von einem Riemenkörper gebildet. Mit anderen Worten ist das jeweilige Riemenende an sich frei von Verbindungs- und bzw. oder Verstärkungselementen, so dass das jeweilige Verbindungselement, welches vorzugsweise aus einer Mehrzahl von Haken pro Riemenende bzw. pro Segmentende sowie einem in der Querrichtung angeordneten starren Kopplungselement wie z.B. aus einem Stab bestehen kann, direkt an dem Riemenende bzw. an dem Material des Riemenendes bzw. des Segmentendes bzw. an dessen Körper angeordnet werden kann. Dies kann die Anzahl der Elemente pro Riemen möglichst gering halten, was die Kosten hinsichtlich Material sowie Montage reduzieren kann.

Gemäß einer vorteilhaften Ausgestaltung des Riemens nach dem ersten und/oder zweiten Aspekt der Erfindung sind die Verbindungselemente jeweils teilweise an jedem Riemenende angeordnet, mit dem jeweiligen Riemenende feststehend verbunden sowie um die Achse der Querrichtung drehbeweglich. Hierdurch können zumindest einige der zuvor beschriebenen Aspekte umgesetzt werden.

Gemäß einer vorteilhaften Ausgestaltung des Riemens nach dem ersten und/oder zweiten Aspekt der Erfindung ist wenigstens ein Verbindungselement, vorzugsweise sind alle Verbindungselemente, als Hakenverbindung ausgebildet. Hierdurch können die zuvor beschrieben Eigenschaften und Vorteile von Hakenverbindungen genutzt werden.

Gemäß einer vorteilhaften Ausgestaltung des Riemens nach dem ersten und/oder zweiten Aspekt der Erfindung ist wenigstens ein Verbindungselement, vorzugsweise alle Verbindungselemente, als stoffschlüssige Verbindung, vorzugsweise als Vulkanisationsverbindung, ausgebildet. Hierdurch können die zuvor beschrieben Eigenschaften und Vorteile von stoffschlüssigen Verbindungen genutzt werden.

Der dritte Aspekt der Erfindung betrifft eine Riemenanlage, vorzugsweise eine Rundballenpresse, mit wenigstens einem Riemen gemäß dem ersten oder zweiten Aspekt der Erfindung und/oder einem der zugehörigen, vorteilhaften Ausgestaltungen. Auf diese Art und Weise können die zuvor beschriebenen Eigenschaften und Vorteile bei einer Riemenanlage genutzt werden. Diese Eigenschaften und Vorteile können insbesondere bei einer Rundballenpresse wie eingangs beschrieben zur Geltung kommen.

Zwei Ausführungsbeispiele zu dem ersten Aspekt der Erfindung, ein Ausführungsbeispiel zu dem zweiten Aspekt der Erfindung und weitere Vorteile der Erfindung werden nachstehend im Zusammenhang mit den folgenden Figuren erläutert. Darin zeigt:
- Fig. 1: eine schematische Draufsicht auf einen erfindungsgemäßen Riemen gemäß einem ersten Ausführungsbeispiel nach dem ersten Aspekt der Erfindung;
- Fig. 2: eine schematische Seitenansicht auf den erfindungsgemäßen Riemen der Fig. 1;
- Fig. 3: eine schematische Draufsicht auf einen beispielhaften, nicht erfindungsgemäßen Riemen;
- Fig. 4: eine schematische perspektivische Darstellung einer Riemenanlage in Form einer Rundballenpresse mit zwei erfindungsgemäßen Riemen gemäß dem ersten Ausführungsbeispiel; und
- Fig. 5: eine schematische Draufsicht auf einen erfindungsgemäßen Riemen gemäß einem ersten Ausführungsbeispiel nach dem zweiten Aspekt der Erfindung.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z. Die Längsrichtung X kann auch als Tiefe X, die Querrichtung Y auch als Breite Y und die vertikale Richtung Z auch als Höhe Z bezeichnet werden.

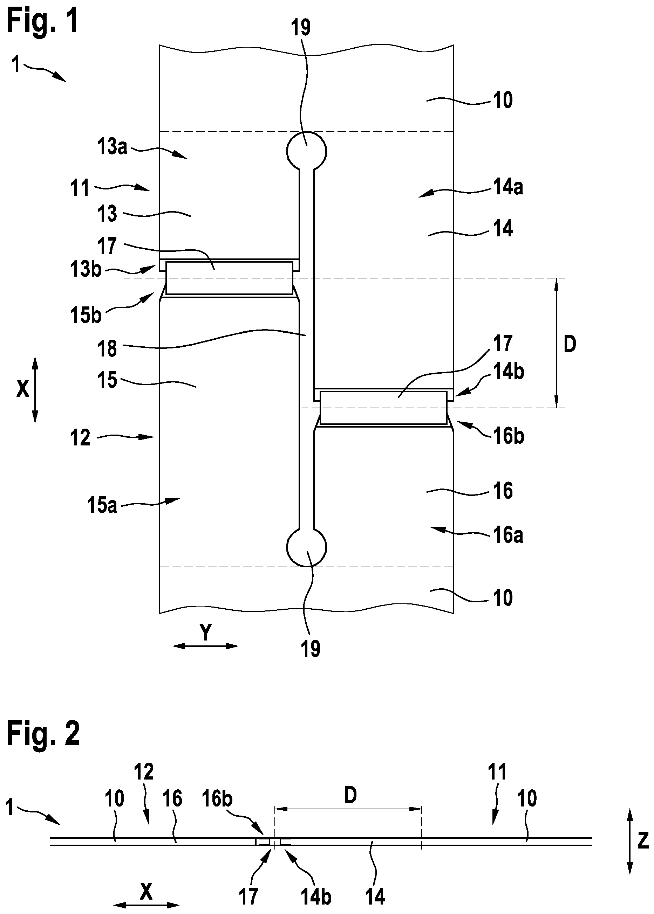

Fig. 1 zeigt eine schematische Draufsicht auf einen erfindungsgemäßen Riemen 1 gemäß einem ersten Ausführungsbeispiel. Fig. 2 zeigt eine schematische Seitenansicht auf den erfindungsgemäßen Riemen 1 der Fig. 1. Der Riemen 1 kann insbesondere bei einer Rundballenpresse (2) eingesetzt und dann als Pressriemen 1 oder auch als Rundballenpressband 1 bezeichnet werden.

Der Riemen 1 erstreckt sich im Wesentlichen in der Längsrichtung X, welche auch die Bewegungsrichtung des Riemens 1 im Betrieb ist. In der Querrichtung Y erstreckt sich der Riemen 1 größer als das 0,15fache seiner länglichen Erstreckung. In der Höhe Z ist der Riemen 1 vergleichsweise gering ausgebildet, siehe Figuren 1 und 2.

Der Riemen 1 weist einen Riemenkörper 10 auf, welcher im Wesentlichen aus einem elastomeren Material besteht, in welches ein in der Längsrichtung X verlaufender Zugträger in Form eines textilen Gewebes (nicht dargestellt) eingebettet ist. Alternativ können auch Stahlseile oder andere längliche Elemente wie z.B. Fäden, Korde und dergleichen aus Kunstfaser und bzw. oder aus Naturfaser als Zugträger verwendet werden.

Der Riemen 1 bzw. dessen Riemenkörper 10 weist im offenen, d.h. im nicht endlos geschlossenen Zustand zwei Riemenenden 11, 12 auf, welche in der Querrichtung Y geradlinig ausgebildet sind. Dabei geht in der Längsrichtung X das erste Riemenende 11 in ein erstes Segment 13 und in ein zweites Segment 14 über (gestrichelt dargestellt), welche in der Längsrichtung X parallel zueinander angeordnet sind. Endsprechend geht in der Längsrichtung X das zweite Riemenende 12 in ein erstes Segment 15 und in ein zweites Segment 16 über (gestrichelt dargestellt), welche ebenfalls in der Längsrichtung X parallel zueinander angeordnet sind.

Das erste Segment 13 des ersten Riemenendes 11 weist einen ersten Segmentkörper 13a des ersten Riemenendes 11 auf, welcher in der Längsrichtung X mit einem ersten Segmentende 13b des ersten Riemenendes 11 endet. Das zweite Segment 14 des ersten Riemenendes 11 weist entsprechend einen zweiten Segmentkörper 14a des ersten Riemenendes 11 auf, welcher in der Längsrichtung X mit einem zweiten Segmentende 14b des ersten Riemenendes 11 endet. Dabei erstrecken sich die beiden Segmente 13, 14 des ersten Riemenendes 11 bzw. dessen Segmentkörper 13a, 14a bzw. dessen Segmentenden 13b, 14b unterschiedlich weit in der Längsrichtung X vom durchgehenden Riemenkörper 10 des ersten Riemenendes 11 zum zweiten Riemenende 12 hin. Hierdurch weisen die Segmentenden 13b, 14b des ersten Riemenendes 11 einen Versatz D in der Längsrichtung X zueinander auf.

Ebenso weist das erste Segment 15 des zweiten Riemenendes 12 einen ersten Segmentkörper 15a des zweiten Riemenendes 12 auf, welcher in der Längsrichtung X mit einem ersten Segmentende 15b des zweiten Riemenendes 12 endet. Das zweite Segment 16 des zweiten Riemenendes 12 weist entsprechend einen zweiten Segmentkörper 16a des zweiten Riemenendes 12 auf, welcher in der Längsrichtung X mit einem zweiten Segmentende 16b des zweiten Riemenendes 12 endet. Dabei erstrecken sich die beiden Segmente 15, 16 des zweiten Riemenendes 12 bzw. dessen Segmentkörper 15a, 16a bzw. dessen Segmentenden 15b, 16b unterschiedlich weit in der Längsrichtung X vom durchgehenden Riemenkörper 10 des zweiten Riemenendes 12 zum ersten Riemenende 11 hin. Hierdurch weisen die Segmentenden 15b, 16b des zweiten Riemenendes 12 denselben Versatz D in der Längsrichtung X zueinander auf wie die Segmentenden 13b, 14b des ersten Riemenendes 11.

Das erste Segment 13 des ersten Riemenendes 11 ist mittels eines Verbindungselements 17 in der Längsrichtung X mit dem ersten Segment 15 des zweiten Riemenendes 12 verbunden. Das Verbindungselement 17 ist als Hakenverbindung 17 (nicht im Detail dargestellt) ausgebildet. Ebenso ist das zweite Segment 14 des ersten Riemenendes 11 mit dem zweiten Segment 16 des zweiten Riemenendes 12 mittels eines weiteren Verbindungselements 17 verbunden.

In der Querrichtung Y zwischen dem ersten Segment 13 des ersten Riemenendes 11, dem ersten Segment 15 des zweiten Riemenendes 12 sowie dessen Verbindungselement 17 auf der einen Seite und dem zweiten Segment 14 des ersten Riemenendes 11, dem zweiten Segment 16 des zweiten Riemenendes 12 sowie dessen Verbindungselement 17 auf der gegenüberliegende Seite erstreckt sich in der Querrichtung Y mittig eine Materialunterbrechung 18 in Form einer gemeinsamen Aussparung 18 in der Längsrichtung X, so dass die beiden ersten Segmente 13, 15 der beiden Riemenenden 11, 12 und die beiden zweiten Segmente 14, 16 der beiden Riemenenden 11, 12 in der Längsrichtung X parallel zueinander und in der Querrichtung Y durch die Aussparung 18 getrennt voneinander verlaufen. Die beiden Enden der gemeinsamen Aussparung 18 weisen dabei jeweils eine kreisförmige Aufweitung 19 auf, welche jeweils der gleichmäßigeren Verteilung des Kraftflusses an dieser Stelle dient.

Durch die Segmentierung der beiden Riemenenden 11, 12 in jeweils zwei parallele Segmente 13, 14, 15, 16 und insbesondere durch die gemeinsame Aussparung 18 zwischen den Segmenten 13, 14, 15, 16 kann ein Ausweichen des Riemens 1 in diesem Bereich gegenüber äußeren Einflüssen ermöglicht werden. Insbesondere kann bei vergleichsweise breiten Riemen 1 in diesem Bereich das Verhalten entsprechend halb so breiter Riemen 1 erreicht werden. Dies kann die Langlebigkeit des Riemens 1, insbesondere bei vergleichsweise breiten Riemen1, erhöhen.

Durch den gleichzeitig vorhandenen Versatz D in der Längsrichtung X kann ferner erreicht werden, dass die beiden Verbindungselemente 17 im Betrieb zu unterschiedlichen Zeitpunkten in Kontakt mit einer Rolle einer Riemenanlage (nicht dargestellt) kommen, so dass die hierdurch auf den Riemen 1 wirkenden Kräfte bzw. Impulse jeweils geringer ausfallen sowie zeitlich versetzt auftreten und damit für den Riemen 1 geringer ausfallen können. Dies kann ebenfalls die Langlebigkeit des Riemens 1 erhöhen.

Dabei den Versatz D derart zu wählen, dass im Betrieb immer nur eines der beiden Verbindungselemente 17 gleichzeitig in Kontakt mit einer Rolle der Riemenanlage stehen kann, kann die zuvor beschriebene Eigenschaften und Vorteile noch verstärken.

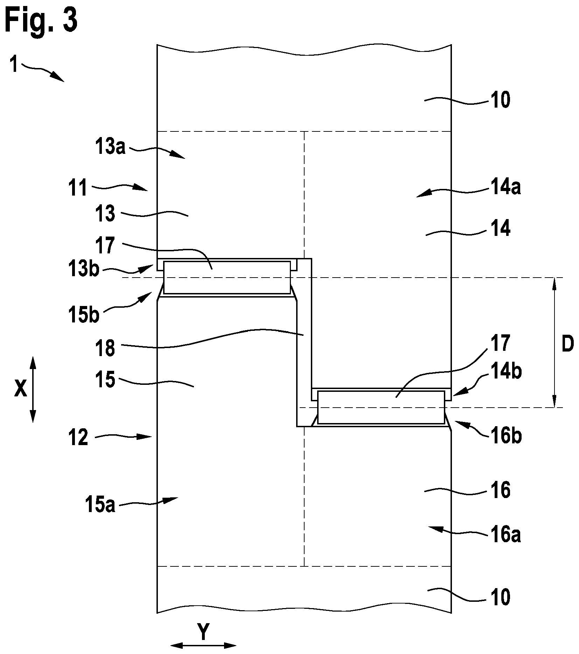

Fig. 3 zeigt eine schematische Draufsicht auf einen beispielhaften, nicht erfindungsgemäßen Riemen 1. Dabei unterscheidet sich der Riemen 1 gemäß der Fig. 3 lediglich dadurch von dem Riemen 1 des ersten Ausführungsbeispiels gemäß der Fig. 1, dass bei dem Riemen 1 des zweiten Ausführungsbeispiels gemäß der Fig. 3 das erste Segment 13 des ersten Riemenendes 11 und das zweite Segment 14 des ersten Riemenendes 11 in der Querrichtung Y nicht durch eine Aussparung 18 voneinander getrennt sind. Dies gilt entsprechend für das erste Segment 15 des zweiten Riemenendes 12 und das zweite Segment 16 des zweiten Riemenendes 12. Vielmehr erstreckt sich die Aussparung 18 lediglich zwischen dem zweiten Segment 14 des ersten Riemenendes 11 und dem ersten Segment 15 des zweiten Riemenendes 12. Dies kann die Umsetzung vereinfachen und beschleunigen. Auch kann hierdurch Aufwand und damit Kosten gespart werden.

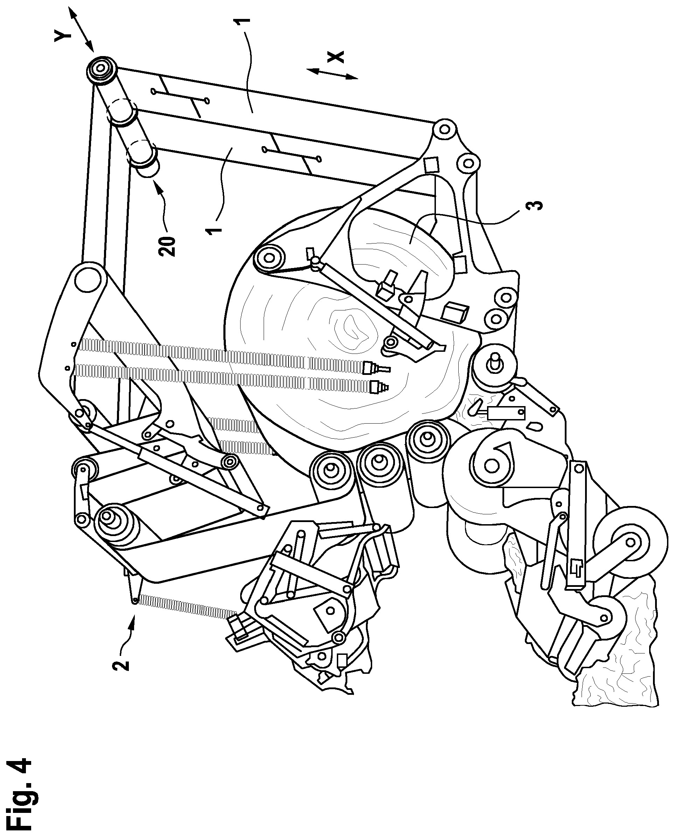

Fig. 4 zeigt eine schematische perspektivische Darstellung einer Riemenanlage 2 in Form einer Rundballenpresse 2 mit zwei erfindungsgemäßen Riemen 1 gemäß dem ersten Ausführungsbeispiel. Die beiden Riemen 1 verlaufen parallel zueinander innerhalb der Rundballenpresse 2 und können gemeinsam Erntegut wie z.B. Heu zwischen sich aufnehmen, um hieraus einen Rundballen 3 zu pressen.

Die Hakenverbindungen 17 sind dabei, wie zuvor beschrieben, in der Längsrichtung X als Bewegungsrichtung des Riemens 1 im Betrieb zueinander versetzt, so dass lediglich eine der beiden Hakenverbindungen 17 eines Riemens 1 gleichzeitig mit einer der Rollen 20 in Kontakt kommen kann, welche zu einer Rollenführung 20 der Rundballenpresse 2 gehören.

Ferner sind die beiden Riemen 1 derart mit ihren Hakenverbindungen 17 in der Längsrichtung X gegeneinander versetzt angeordnet, dass auch aufgrund dieser Anordnung lediglich eine der insgesamt vier Hakenverbindungen 17 beider Riemen 1 gleichzeitig mit einer der Rollen 20 in Kontakt kommen kann. Hierdurch können die zuvor beschriebenen Aspekt eines erfindungsgemäßen Riemens 1 auch auf die Anordnung mehrerer erfindungsgemäßer Riemen 1 zueinander übertragen werden.

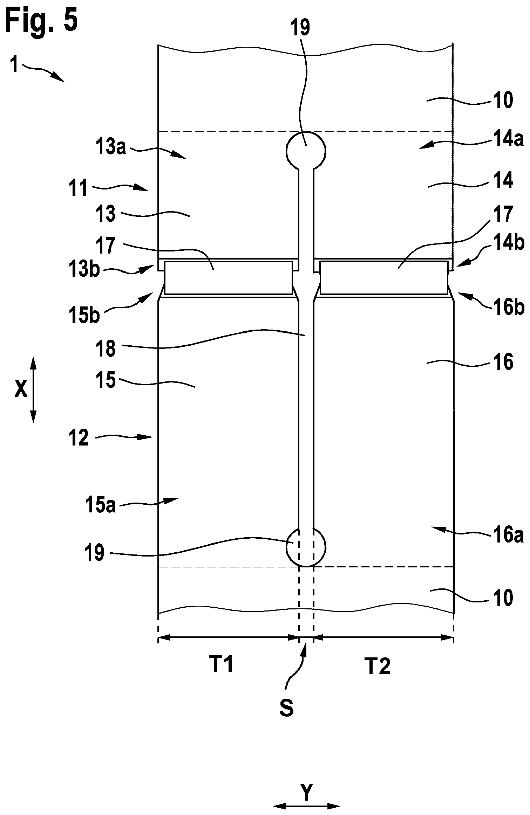

Fig. 5 zeigt eine schematische Draufsicht auf einen erfindungsgemäßen Riemen 1 gemäß einem weiteren Ausführungsbeispiel. Der Riemen 1 aus der Fig. 5 entspricht dabei dem Riemen gemäß dem ersten Ausführungsspiel, das in Fig. 1 gezeigt ist mit der Ausnahme, dass die Segmente 13, 14 bzw. die Segmente 15, 16 nicht in Längsrichtung X versetzt sind. Vielmehr ist es bei dem Ausführungsbeispiel aus Fig. 5 vorgesehen, dass das erste Segment 13 des ersten Riemenendes 11 gegenüber dem zweiten Segment 14 des ersten Riemenendes 11 in der Längsrichtung X versatzfrei angeordnet ist, und dass das erste Segment 15 des zweiten Riemenendes 12 gegenüber dem zweiten Segment 16 des zweiten Riemenendes 12 in der Längsrichtung X versatzfrei angeordnet ist.

Das erste Segment 13 des ersten Riemenendes 11 weist einen ersten Segmentkörper 13a des ersten Riemenendes 11 auf, welcher in der Längsrichtung X mit einem ersten Segmentende 13b des ersten Riemenendes 11 endet. Das zweite Segment 14 des ersten Riemenendes 11 weist entsprechend einen zweiten Segmentkörper 14a des ersten Riemenendes 11 auf, welcher in der Längsrichtung X mit einem zweiten Segmentende 14b des ersten Riemenendes 11 endet. Dabei erstrecken sich die beiden Segmente 13, 14 des ersten Riemenendes 11 bzw. dessen Segmentkörper 13a, 14a bzw. dessen Segmentenden 13b, 14b gleich weit in der Längsrichtung X vom durchgehenden Riemenkörper 10 des ersten Riemenendes 11 zum zweiten Riemenende 12 hin. Hierdurch weisen die Segmentenden 13b, 14b des ersten Riemenendes 11 keinen Versatz in der Längsrichtung X zueinander auf, sondern die Segmentenden 13b, 14b sind fluchtend in Querrichtung Y angeordnet.

Ebenso weist das erste Segment 15 des zweiten Riemenendes 12 einen ersten Segmentkörper 15a des zweiten Riemenendes 12 auf, welcher in der Längsrichtung X mit einem ersten Segmentende 15b des zweiten Riemenendes 12 endet. Das zweite Segment 16 des zweiten Riemenendes 12 weist entsprechend einen zweiten Segmentkörper 16a des zweiten Riemenendes 12 auf, welcher in der Längsrichtung X mit einem zweiten Segmentende 16b des zweiten Riemenendes 12 endet. Dabei erstrecken sich die beiden Segmente 15, 16 des zweiten Riemenendes 12 bzw. dessen Segmentkörper 15a, 16a bzw. dessen Segmentenden 15b, 16b gleich weit in der Längsrichtung X vom durchgehenden Riemenkörper 10 des zweiten Riemenendes 12 zum ersten Riemenende 11 hin. Hierdurch weisen die Segmentenden 15b, 16b des zweiten Riemenendes 12 keinen Versatz D in der Längsrichtung X zueinander auf, sondern die Segmentenden 15b, 16b sind fluchtend in Querrichtung Y angeordnet.

Durch die Segmentierung der beiden Riemenenden 11, 12 in jeweils zwei parallele Segmente 13, 14, 15, 16 und insbesondere durch die gemeinsame Aussparung 18 zwischen den Segmenten 13, 14, 15, 16 kann ein Ausweichen des Riemens 1 in diesem Bereich gegenüber äußeren Einflüssen ermöglicht werden. Insbesondere kann bei vergleichsweise breiten Riemen 1 in diesem Bereich das Verhalten entsprechend halb so breiter Riemen 1 erreicht werden. Dies kann die Langlebigkeit des Riemens 1, insbesondere bei vergleichsweise breiten Riemen1, erhöhen.

### Bezugszeichenliste (Teil der Beschreibung)

- D: Versatz zwischen Verbindungselementen 17 in Längsrichtung X
- X: Längsrichtung; Tiefe
- Y: Querrichtung; Breite
- Z: vertikale Richtung; Höhe

- 1: Riemen; Pressriemen; Rundballenpressband
- 10: (elastomerer) Riemenkörper
- 11: erstes Riemenende
- 12: zweites Riemenende
- 13: erstes Segment des ersten Riemenendes 11
- 13a: erster Segmentkörper des ersten Riemenendes 11
- 13b: erstes Segmentende des ersten Riemenendes 11
- 14: zweites Segment des ersten Riemenendes 11
- 14a: zweiter Segmentkörper des ersten Riemenendes 11
- 14b: zweites Segmentende des ersten Riemenendes 11
- 15: erstes Segment des zweiten Riemenendes 12
- 15a: erster Segmentkörper des zweiten Riemenendes 12
- 15b: erstes Segmentende des zweiten Riemenendes 12
- 16: zweites Segment des zweiten Riemenendes 12
- 16a: zweiter Segmentkörper des zweiten Riemenendes 12
- 16b: zweites Segmentende des zweiten Riemenendes 12
- 17: Verbindungselemente; Hakenverbindungen
- 18: (gemeinsame) Materialunterbrechung; (gemeinsame) Aussparung
- 19: kreisförmige Aufweitungen der Materialunterbrechung 18
- 2: Riemenanlage; Rundballenpresse
- 20: Rollenführung; Rollen
- 3: Rundballen

## Patentansprüche

1. Riemen (1)
mit einem ersten Riemenende (11) und
mit einem zweiten Riemenende (12),
wobei die beiden Riemenenden (11, 12) miteinander verbunden sind,
wobei das erste Riemenende (11) wenigstens ein erstes Segment (13) und ein zweites Segment (14) aufweist,
wobei das zweite Riemenende (12) wenigstens ein erstes Segment (15) und ein zweites Segment (16) aufweist,
wobei das erste Segment (13) des ersten Riemenendes (11) mit dem ersten Segment (15) des zweiten Riemenendes (12) mittels wenigstens eines Verbindungselements (17) verbunden ist, und
wobei das zweite Segment (14) des ersten Riemenendes (11) mit dem zweiten Segment (16) des zweiten Riemenendes (12) mittels wenigstens eines weiteren Verbindungselements (17) verbunden ist,
wobei das erste Segment (13) des ersten Riemenendes (11) gegenüber dem zweiten Segment (14) des ersten Riemenendes (11) in der Längsrichtung (X) abschnittsweise versetzt angeordnet ist, und
wobei das erste Segment (15) des zweiten Riemenendes (12) gegenüber dem zweiten Segment (16) des zweiten Riemenendes (12) in der Längsrichtung (X) abschnittsweise versetzt angeordnet ist,
**dadurch gekennzeichnet, dass**
das erste Segment (13) des ersten Riemenendes (11) und das zweite Segment (14) des ersten Riemenendes (11) in der Querrichtung (Y) durch eine Materialunterbrechung (18) voneinander getrennt sind, und/oder dass das erste Segment (15) des zweiten Riemenendes (12) und das zweite Segment (16) des zweiten Riemenendes (12) in der Querrichtung (Y) durch eine Materialunterbrechung (18) voneinander getrennt sind.

2. Riemen (1)
mit einem ersten Riemenende (11) und
mit einem zweiten Riemenende (12),
wobei die beiden Riemenenden (11, 12) miteinander verbunden sind,
wobei das erste Riemenende (11) wenigstens ein erstes Segment (13) und ein zweites Segment (14) aufweist,
wobei das zweite Riemenende (12) wenigstens ein erstes Segment (15) und ein zweites Segment (16) aufweist,
wobei das erste Segment (13) des ersten Riemenendes (11) mit dem ersten Segment (15) des zweiten Riemenendes (12) mittels wenigstens eines Verbindungselements (17) verbunden ist, und
wobei das zweite Segment (14) des ersten Riemenendes (11) mit dem zweiten Segment (16) des zweiten Riemenendes (12) mittels wenigstens eines weiteren Verbindungselements (17) verbunden ist,
wobei das erste Segment (13) des ersten Riemenendes (11) gegenüber dem zweiten Segment (14) des ersten Riemenendes (11) in der Längsrichtung (X) versatzfrei angeordnet ist,
wobei das erste Segment (15) des zweiten Riemenendes (12) gegenüber dem zweiten Segment (16) des zweiten Riemenendes (12) in der Längsrichtung (X) versatzfrei angeordnet ist,
**dadurch gekennzeichnet, dass**
das erste Segment (13) des ersten Riemenendes (11) und das zweite Segment (14) des ersten Riemenendes (11) in der Querrichtung (Y) durch eine Materialunterbrechung (18) voneinander getrennt sind, und dass
das erste Segment (15) des zweiten Riemenendes (12) und das zweite Segment (16) des zweiten Riemenendes (12) in der Querrichtung (Y) durch eine Materialunterbrechung (18) voneinander getrennt sind.

3. Riemen (1) nach Anspruch 1, **dadurch gekennzeichnet, dass**
das Verbindungselement (17) zwischen den ersten Segmenten (13, 15) der beiden Riemenenden (11, 12) in der Längsrichtung (X) um einen vorbestimmten Versatz (D) versetzt gegenüber dem Verbindungselement (17)zwischen den zweiten Segmenten (14, 16) der beiden Riemenenden (11, 12) angeordnet ist.

4. Riemen (1) nach einem der vorangehenden Ansprüche, **dadurch gekennzeichnet, dass**
das erste Segment (13) des ersten Riemenendes (11) ausschließlich mit dem ersten Segment (15) des zweiten Riemenendes (12) verbunden ist, und dass das zweite Segment (14) des ersten Riemenendes (11) ausschließlich mit dem zweiten Segment (16) des zweiten Riemenendes (12) verbunden ist.

5. Riemen (1) nach einem der vorhergehenden Ansprüche, **dadurch gekennzeichnet, dass**
die Segmente (13, 14) des ersten Riemenendes (11) und die Segmente (15, 16) des zweiten Riemenendes (12) durch eine gemeinsame Materialunterbrechung (18) voneinander getrennt sind.

6. Riemen (1) nach einem der vorhergehenden Ansprüche, **dadurch gekennzeichnet, dass**
die Materialunterbrechung (18) bzw. Materialunterbrechungen (18) als Aussparung (18) bzw. Aussparungen (18), vorzugsweise auch zwischen den beiden Riemenende (11, 12), ausgebildet ist/sind.

7. Riemen (1) nach Anspruch 6, **dadurch gekennzeichnet, dass**
das erste Segment (13) des ersten Riemenendes (11) gegenüber dem zweiten Segment (14) des ersten Riemenendes (11) durch die Aussparung (18) in der Querrichtung (Y) beabstandet angeordnet ist, und dass
das erste Segment (15) des zweiten Riemenendes (12) gegenüber dem zweiten Segment (16) des zweiten Riemenendes (12) durch die Aussparung (18) in der Querrichtung (Y) beabstandet angeordnet ist.

8. Riemen nach dem vorhergehenden Anspruch, **dadurch gekennzeichnet, dass** das erste Segment (13) des ersten Riemenendes (11) eine erste, mittlere Segmentbreite (T1) in der Querrichtung (Y) aufweist,
wobei die Aussparung (18) zwischen dem ersten Segment (13) des ersten Riemenendes (11) und dem zweiten Segment (14) des ersten Riemenendes (11) eine erste, mittlere Aussparungsbreite (S) in der Querrichtung (Y) aufweist, die kleiner als die erste Segmentbreite (T1) ist.

9. Riemen nach dem vorhergehenden Anspruch, **dadurch gekennzeichnet, dass** die erste Segmentbreite (T1) zwischen 1450 mm und 1550 mm, vorzugsweise zwischen 1100 mm und 1180 mm, besonders bevorzugt zwischen 520 mm und 590 mm, weiter bevorzugt zwischen 350 mm und 390 mm ist.

10. Riemen nach einem der vorhergehenden Ansprüche 8 bis 9, **dadurch gekennzeichnet, dass** die erste Aussparungsbreite (S) vorzugsweise zwischen 5 mm und 50 mm, vorzugsweise zwischen 10 mm und 30 mm, besonders bevorzugt 20 mm ist.

11. Riemen nach einem der vorhergehenden Ansprüche 8 bis 10, **dadurch gekennzeichnet, dass** die erste Aussparungsbreite (S) maximal 50% der ersten Segmentbreite (T1), vorzugsweise maximal 25% der ersten Segmentbreite (T1), besonders bevorzugt maximal 10% der ersten Segmentbreite (T1) beträgt.

12. Riemen nach einem der vorhergehenden Ansprüche 8 bis 11, **dadurch gekennzeichnet, dass** die erste Aussparungsbreite (S) mindestens 2% der ersten Segmentbreite (T1), vorzugsweise mindestens 5% der ersten Segment-breite (T1) oder besonders bevorzugt mindestens 10% der ersten Segmentbreite (T1) beträgt.

13. Riemen nach einem der vorhergehenden Ansprüche 8 bis 12, **dadurch gekennzeichnet, dass** das erste Segment (13) des ersten Riemenendes (11) und das zweite Segment (14) des ersten Riemenendes (11) in Querrichtung (Y) zumindest im Wesentlichen gleich breit sind.

14. Riemen (1) nach einem der Ansprüche 6 bis 13, **dadurch gekennzeichnet,**
**dass** die Aussparung (18) bzw. Aussparungen (18) in der Längsrichtung (X) wenigstens einseitig, vorzugsweise beidseitig, am Ende ihrer Erstreckung eine kreisförmige Aufweitung (19) aufweist/aufweisen.

15. Riemenanlage (2), vorzugsweise Rundballenpresse (2),
mit wenigstens einem Riemen (1) nach einem der vorangehenden Ansprüche.

## Claims

1. A belt (1),
having a first belt end (11), and
having a second belt end (12),
wherein the two belt ends (11, 12) are joined to each other,
wherein the first belt end (11) has at least a first segment (13) and a second segment (14),
wherein the second belt end (12) has at least a first segment (15) and a second segment (16),
wherein the first segment (13) of the first belt end (11) is joined to the first segment (15) of the second belt end (12) by means of at least one joining element (17), and
wherein the second segment (14) of the first belt end (11) is joined to the second segment (16) of the second belt end (12) by means of at least one further joining element (17),
wherein the first segment (13) of the first belt end (11) is arranged offset in sections with respect to the second segment (14) of the first belt end (11) in the longitudinal direction (X), and
wherein the first segment (15) of the second belt end (12) is arranged offset in sections with respect to the second segment (16) of the second belt end (12) in the longitudinal direction (X),
**characterized in that**
the first segment (13) of the first belt end (11) and the second segment (14) of the first belt end (11) are separated from one another in the transverse direction (Y) by a material interruption (18), and/or **in that**
the first segment (15) of the second belt end (12) and the second segment (16) of the second belt end (12) are separated from one another in the transverse direction (Y) by a material interruption (18).

2. A belt (1),
having a first belt end (11), and
having a second belt end (12),
wherein the two belt ends (11, 12) are joined to each other,
wherein the first belt end (11) has at least a first segment (13) and a second segment (14),
wherein the second belt end (12) has at least a first segment (15) and a second segment (16),
wherein the first segment (13) of the first belt end (11) is joined to the first segment (15) of the second belt end (12) by means of at least one joining element (17), and
wherein the second segment (14) of the first belt end (11) is joined to the second segment (16) of the second belt end (12) by means of at least one further joining element (17),
wherein the first segment (13) of the first belt end (11) is arranged without offset with respect to the second segment (14) of the first belt end (11) in the longitudinal direction (X),
wherein the first segment (15) of the second belt end (12) is arranged without offset with respect to the second segment (16) of the second belt end (12) in the longitudinal direction (X),
**characterized in that**
the first segment (13) of the first belt end (11) and the second segment (14) of the first belt end (11) are separated from one another in the transverse direction (Y) by a material interruption (18), and **in that**
the first segment (15) of the second belt end (12) and the second segment (16) of the second belt end (12) are separated from one another in the transverse direction (Y) by a material interruption (18).

3. The belt (1) according to claim 1, **characterized in that**
the joining element (17) is arranged between the first segments (13, 15) of the two belt ends (11, 12) offset in the longitudinal direction (X) by a predetermined offset (D) relative to the joining element (17) between the second segments (14, 16) of the two belt ends (11, 12).

4. The belt (1), according to any one of the preceding claims, **characterized in that**
the first segment (13) of the first belt end (11) is joined exclusively to the first segment (15) of the second belt end (12), and that the second segment (14) of the first belt end (11) is joined exclusively to the second segment (16) of the second belt end (12).

5. The belt (1), according to any one of the preceding claims, **characterized in that**
the segments (13, 14) of the first belt end (11) and the segments (15, 16) of the second belt end (12) are separated from one another by a common material interruption (18).

6. The belt (1), according to any one of the preceding claims, **characterized in that**
the material interruption (18) or material interruptions (18) is/are formed as a recess (18) or recesses (18), preferably also between the two belt ends (11, 12).

7. The belt (1) according to claim 6, **characterized in that**
the first segment (13) of the first belt end (11) is arranged at a distance from the second segment (14) of the first belt end (11) by the recess (18) in the transverse direction (Y), and **in that**
the first segment (15) of the second belt end (12) is arranged at a distance from the second segment (16) of the second belt end (12) by the recess (18) in the transverse direction (Y).

8. The belt according to the preceding claim, **characterized in that** the first segment (13) of the first belt end (11) has a first, average segment width (T1) in the transverse direction (Y),
wherein the recess (18) between the first segment (13) of the first belt end (11) and the second segment (14) of the first belt end (11) has a first, average recess width (S) in the transverse direction (Y), which is smaller than the first segment width (T1).

9. The belt according to the preceding claim, **characterized in that** the first segment width (T1) is between 1450 mm and 1550 mm, preferably between 1100 mm and 1180 mm, particularly preferably between 520 mm and 590 mm, more preferably between 350 mm and 390 mm.

10. The belt according to one of the preceding claims 8 to 9, **characterized in that** the first recess width (S) is preferably between 5 mm and 50 mm, preferably between 10 mm and 30 mm, particularly preferably 20 mm.

11. The belt according to one of the preceding claims 8 to 10, **characterized in that** the first recess width (S) is at most 50% of the first segment width (T1), preferably at most 25% of the first segment width (T1), particularly preferably at most 10% of the first segment width (T1).

12. The belt according to one of the preceding claims 8 to 11, **characterized in that** the first recess width (S) is at least 2% of the first segment width (T1), preferably at least 5% of the first segment width (T1), particularly preferably at least 10% of the first segment width (T1).

13. The belt according to one of the preceding claims 8 to 12, **characterized in that** the first segment (13) of the first belt end (11) and the second segment (14) of the first belt end (11) have at least substantially the same width in the transverse direction (Y).

14. The belt (1) according to any one of claims 6 to 13, **characterized in that** the recess (18) or recesses (18) has/have a circular widening (19) in the longitudinal direction (X) at least on one side, preferably on both sides, at the end of its extension.

15. A belt system (2), preferably a round baler (2),
with at least one belt (1) according to any one of the preceding claims.

## Revendications

1. Courroie (1)
avec une première extrémité de courroie (11) et
avec une seconde extrémité de courroie (12),
dans laquelle les deux extrémités de courroie (11, 12) sont reliées l'une à l'autre,
dans laquelle la première extrémité de courroie (11) présente au moins un premier segment (13) et un second segment (14),
dans laquelle la seconde extrémité de courroie (12) présente au moins un premier segment (15) et un second segment (16),
dans laquelle le premier segment (13) de la première extrémité de courroie (11) est relié au premier segment (15) de la seconde extrémité de courroie (12) au moyen d'au moins un élément de liaison (17), et
dans laquelle le second segment (14) de la première extrémité de courroie (11) est relié au second segment (16) de la seconde extrémité de courroie (12) au moyen d'au moins un autre élément de liaison (17),
dans laquelle le premier segment (13) de la première extrémité de courroie (11) est disposé de manière décalée par endroits dans la direction longitudinale (X) par rapport au second segment (14) de la première extrémité de courroie (11), et
dans laquelle le premier segment (15) de la seconde extrémité de courroie (12) est disposé de manière décalée par endroits dans la direction longitudinale (X) par rapport au second segment (16) de la seconde extrémité de courroie (12),
**caractérisée en ce que**
le premier segment (13) de la première extrémité de courroie (11) et le second segment (14) de la première extrémité de courroie (11) sont séparés l'un de l'autre par une interruption de matériau (18) dans la direction transversale (Y), et/ou que le premier segment (15) de la seconde extrémité de courroie (12) et le second segment (16) de la seconde extrémité de courroie (12) sont séparés l'un de l'autre par une interruption de matériau (18) dans la direction transversale (Y).

2. Courroie (1)
avec une première extrémité de courroie (11) et
avec une seconde extrémité de courroie (12),
dans laquelle les deux extrémités de courroie (11, 12) sont reliées l'une à l'autre,
dans laquelle la première extrémité de courroie (11) présente au moins un premier segment (13) et un second segment (14),
dans laquelle la seconde extrémité de courroie (12) présente au moins un premier segment (15) et un second segment (16),
dans laquelle le premier segment (13) de la première extrémité de courroie (11) est relié au premier segment (15) de la seconde extrémité de courroie (12) au moyen d'au moins un élément de liaison (17), et
dans laquelle le second segment (14) de la première extrémité de courroie (11) est relié au second segment (16) de la seconde extrémité de courroie (12) au moyen d'au moins un autre élément de liaison (17),
dans laquelle le premier segment (13) de la première extrémité de courroie (11) est disposé sans décalage dans la direction longitudinale (X) par rapport au second segment (14) de la première extrémité de courroie (11),
dans laquelle le premier segment (15) de la seconde extrémité de courroie (12) est disposé sans décalage dans la direction longitudinale (X) par rapport au second segment (16) de la seconde extrémité de courroie (12),
**caractérisée en ce que**
le premier segment (13) de la première extrémité de courroie (11) et le second segment (14) de la première extrémité de courroie (11) sont séparés l'un de l'autre par une interruption de matériau (18) dans la direction transversale (Y), et que
le premier segment (15) de la seconde extrémité de courroie (12) et le second segment (16) de la seconde extrémité de courroie (12) sont séparés l'un de l'autre par une interruption de matériau (18) dans la direction transversale (Y).

3. Courroie (1) selon la revendication 1, **caractérisée en ce que**
l'élément de liaison (17) entre les premiers segments (13, 15) des deux extrémités de courroie (11, 12) est disposé entre les deux segments (14, 16) des deux extrémités de courroie (11, 12) de manière décalée d'un décalage (D) prédéfini par rapport à l'élément de liaison (17) dans la direction longitudinale (X).

4. Courroie (1) selon l'une quelconque des revendications précédentes, **caractérisée en ce que**
le premier segment (13) de la première extrémité de courroie (11) est relié exclusivement au premier segment (15) de la seconde extrémité de courroie (12), et que le second segment (14) de la première extrémité de courroie (11) est relié exclusivement au second segment (16) de la seconde extrémité de courroie (12).

5. Courroie (1) selon l'une quelconque des revendications précédentes, **caractérisée en ce que**
les segments (13, 14) de la première extrémité de courroie (11) et les segments (15, 16) de la seconde extrémité de courroie (12) sont séparés les uns des autres par une interruption de matériau (18) commune.

6. Courroie (1) selon l'une des revendications précédentes, **caractérisée en ce que**
l'interruption de matériau (18) ou les interruptions de matériau (18) est réalisée/sont réalisées en tant qu'un évidement (18) ou qu'évidements (18), de préférence également entre les deux extrémités de courroie (11, 12).

7. Courroie (1) selon la revendication 6, **caractérisée en ce que**
le premier segment (13) de la première extrémité de courroie (11) est disposé de manière espacée par rapport au second segment (14) de la première extrémité de courroie (11) par l'évidement (18) dans la direction transversale (Y), et que
le premier segment (15) de la seconde extrémité de courroie (12) est disposé de manière espacée par rapport au second segment (16) de la seconde extrémité de courroie (12) par l'évidement (18) dans la direction transversale (Y).

8. Courroie selon la revendication précédente, **caractérisée en ce que** le premier segment (13) de la première extrémité de courroie (11) présente une première largeur de segment moyenne (T1) dans la direction transversale (Y),
dans laquelle l'évidement (18) présente entre le premier segment (13) de la première extrémité de courroie (11) et le second segment (14) de la première extrémité de courroie (11), une première largeur d'évidement moyenne (S) dans la direction transversale (Y), qui est plus petite que la première largeur de segment (T1).

9. Courroie selon la revendication précédente, **caractérisée en ce que** la première largeur de segment (T1) est comprise entre 1450 mm et 1550 mm, de préférence entre 1100 mm et 1180 mm, de manière particulièrement préférée entre 520 mm et 590 mm, par ailleurs de manière préférée entre 350 mm et 390 mm.

10. Courroie selon l'une des revendications précédentes 8 et 9, **caractérisée en ce que** la première largeur d'évidement (S) est de préférence comprise entre 5 mm et 50 mm, de préférence entre 10 mm et 30 mm, est de manière particulièrement préférée de 20 mm.

11. Courroie selon l'une des revendications précédentes 8 à 10, **caractérisée en ce que** la première largeur d'évidement (S) est égale au maximum à 50 % de la première largeur de segment (T1), de préférence au maximum à 25 % de la première largeur de segment (T1), de manière particulièrement préférée au maximum à 10 % de la première largeur de segment (T1).

12. Courroie selon l'une des revendications précédentes 8 à 11, **caractérisée en ce que** la première largeur d'évidement (S) est égale au moins à 2 % de la première largeur de segment (T1), de préférence au moins à 5 % de la première largeur de segment (T1) ou de manière particulièrement préférée au moins à 10 % de la première largeur de segment (T1).

13. Courroie selon l'une quelconque des revendications précédentes 8 à 12, **caractérisée en ce que** le premier segment (13) de la première extrémité de courroie (11) et le second segment (14) de la première extrémité de courroie (11) présentent au moins sensiblement la même largeur dans la direction transversale (Y).

14. Courroie (1) selon l'une quelconque des revendications 6 à 13, **caractérisée en ce**
**que** l'évidement (18) ou les évidements (18) présente/présentent dans la direction longitudinale (X) au moins d'un côté, de préférence des deux côtés, sur l'extrémité de son extension, un élargissement circulaire (19).

15. Installation à courroie (2), de préférence presse à balles rondes (2),
avec au moins une courroie (1) selon l'une quelconque des revendications précédentes.
